Europäisches Patentamt

European Patent Office

Office européen des brevets

(19)

(11) Veröffentlichungsnummer: **0 198 243**
**B1**

(12) **EUROPÄISCHE PATENTSCHRIFT**

(45) Veröffentlichungstag der Patentschrift:
**17.11.88**

(21) Anmeldenummer: **86103538.4**

(22) Anmeldetag: **15.03.86**

(51) Int. Cl.⁴: **C 07 C 67/03, C 07 C 69/52,
C 07 C 67/08, C 11 C 3/00,
C 11 C 3/04**

(54) Verfahren zur Herstellung von Carbonsäurealkylestern, insbesondere Fettsäurealkylestern.

(30) Priorität: **06.04.85 DE 3512497**

(43) Veröffentlichungstag der Anmeldung:
**22.10.86 Patentblatt 86/43**

(45) Bekanntmachung des Hinweises auf die Patenterteilung:
**17.11.88 Patentblatt 88/46**

(84) Benannte Vertragsstaaten:
**BE DE FR GB IT NL**

(56) Entgegenhaltungen:
**GB - A - 634 411**

**JOURNAL OF THE AMERICAN OIL CHEMISTS
SOCIETY, Band 60, Nr. 8, August 1983, Seiten 1596-1598,
Champaign, Illinois, US; W.E. KLOPFENSTEIN et al.:
"Efficiencies of various esters of fatty acids as diesel
fuels"
G. Vellguth, Grundl. Landtechnik, Bd. 32 (1982), pp.
177-186**

Die Akte enthält technische Angaben, die nach dem
Eingang der Anmeldung eingereicht wurden und die
nicht in dieser Patentschrift enthalten sind.

(73) Patentinhaber: **HÜLS AKTIENGESELLSCHAFT, - RSP
Patente / PB 15 - Postfach 13 20, D-4370 Marl 1 (DE)**

(72) Erfinder: **Hofmann, Peter, Dr., Dormagener Strasse 42,
D-4370 Marl (DE)**

## Beschreibung

Bedingt durch die veränderte Rohstoffsituation werden z. Z. erhebliche Anstrengungen unternommen, Derivate natürlicher Fette als Voll- oder Teilersatz für Dieselkraftstoffe einzusetzen. Den Estern der Fettsäuren kommt in diesem Zusammenhang eine besondere Bedeutung zu.

Die Ester von $C_{6-24}$-Carbonsäuren mit $C_{1-4}$-Alkanolen sind darüber hinaus ein wichtiges fettchemisches Zwischenprodukt, das zu Fettalkoholen, Fettsäurealkanolamiden, -Sulfofettsäurealkylestern etc. weiterverarbeitet werden kann, das aber auch als solches als Ersatz für Dieselkraftstoff Verwendung findet (siehe W. E. Klopfenstein, H. S. Walker, J. Am. Oil Chem. Soc. 60 (8), 1596 (1983) und H. J. Harwood, J. Am. Oil Chem. Soc. 61, (2), 315 (1984).

Gebräuchliche Verfahren zur Herstellung dieser Ester gehen von rohen, teil- oder vollraffinierten Fetten und/oder von Fettsäuren aus (vgl. Bailey, «Industrial Oil and Fat Products», Vol. 2, 4th ed., J. Wiley & Sons, New York, 1982 sowie J. Baltes «Gewinnung und Verarbeitung von Nahrungsfetten», Verlag P. Parey, Berlin und Hamburg [1975]).

Den bisher bekannten Verfahren unter saurer und/oder alkalischer Katalyse ist gemeinsam, dass die Reaktionsprodukte in mehr oder minder grossem Umfang durch Katalysatorbestandteile verunreinigt sind. Damit wird aber ihre direkte Weiterverwendung in einem nicht vertretbaren Masse eingeschränkt.

Als saure Katalysatoren kommen vor allem Schwefelsäure, Phosphorsäure und ihre Derivate in Frage. Gerade S- und P-haltige Verbindungen stellen aber Gifte für Katalysatoren dar, die für die anschliessende Umsetzung der Ester zu Fettalkoholen und Tensidrohstoffen benötigt werden (vgl. F. Zymalkowski «Katalytische Hydrierungen», Ferdinand Enke-Verlag, Stuttgart, S. 34 (1965).

Es ist ferner bekannt, dass die Umesterung von Fetten in Gegenwart von Halogeniden des Bors, Aluminiums und Eisens durchgeführt werden kann (vgl. US-PS 2 383 601 sowie SU-PS 255 245). Diese Halogenide werden infolge von Hydrolyse verbraucht. Sie müssen also laufend ergänzt werden. Die entstehenden Säuren sind nicht nur korrosiv, sie verunreinigen auch das Endprodukt mit Halogenverbindungen und beeinträchtigen damit deren Weiterverarbeitung.

Fettsäurefreie Fette werden üblicherweise in Gegenwart alkalischer Katalysatoren wie Natrium-, Kaliumhydroxid oder Natriummethanolat und der gewünschten Alkohole in die entsprechenden Ester überführt. Bei dieser Verfahrensweise lässt es sich nicht vermeiden, dass – je nach Metall, Katalysatormenge und Art des Verfahrens – bis zu 1000 ppm Alkalimetalle als Verunreinigungen in die Ester gelangen. Will man derartige Ester beispielsweise im Treibstoffsektor einsetzen, sind aufwendige Reinigungsoperationen erforderlich (vgl. «Nutzungsmöglichkeiten alternativer Kraftstoffe in Entwicklungsländern», Interdisziplinäre Projekt Consult GmbH (IPC), Frankfurt am Main, (1983), S. 42, G. Vellguth, Grundlagen der Landtechnik 32 (5), (1982) («Eignung von Pflanzenölen...»).

Sollen rohe Fette, die neben Patialglyceriden und freiem Glycerin auch beträchtliche Mengen an freien Fettsäuren enthalten, weitgehend vollständig in die entsprechenden Ester überführt werden, müssen zunächst in einer Vorstufe die freien Fettsäuren – wie oben beschrieben – sauer verestert werden (vgl. US-PS 2 383 601). Die GB-PS 634 411 beschreibt ein Verfahren zur Veresterung der in rohen Fetten enthaltenden Fettsäuren mit einem Überschuss an $C_{1-6}$-Alkoholen bei erhöhter Temperatur in Gegenwart eines Katalysators, der ein Oxid eines Elements der Gruppe VIII des Periodensystems enthält. Die Ausbeuten dieses Verfahrens schwanken beträchtlich; sie liegen zwischen 47 und 95%. Ziel des Verfahrens ist es, die rohen Fette zu reinigen und ein möglichst hell gefärbtes Material zu erhalten (vgl. Seite 1, Zeilen 15–24). Unerwünschterweise wird unter den Reaktionsbedingungen auch ein geringer Teil des Fettes abgebaut. Aus Versuchen der Anmelderin geht hervor, dass die in der GB-PS 634 411 aufgeführten Katalysatoren für die Umesterung nicht geeignet sind.

Das Verfahren der GB-PS 795 573 sieht vor, rohe, fettsäurehaltige Fette in Gegenwart eines heterogenen Kontaktes aus Zinksilikat ein- oder mehrstufig umzusetzen. Eigene Erfahrungen zeigen, dass die Reaktionsprodukte bei Verwendung von Zinkkatalysatoren in erheblichen Mengen durch metallische Verunreinigungen (insbesondere Zinkseifen) verunreinigt sind. Dies ist bereits visuell erkennbar. Ein solches Verfahren kommt für die Herstellung von Dieselkraftstoffen nicht in Frage. Auch bei der Herstellung von Tensidrohstoffen treten Schwierigkeiten auf.

Ein erheblicher Nachteil der bisher bekannten Verfahren besteht darin, dass zwangsläufig erhebliche Mengen an Glycerin (ca. 5 bis 15% der eingesetzten Fettmenge) auftreten. Der Markt für Glycerin (Kosmetik, Feuchthaltemittel, Weichmacher, Komponente für Polykondensate, Tenside etc.) ist im Falle einer grosstechnischen Realisierung angesichts der riesigen anfallenden Mengen überfordert. Zur Vermeidung wirtschaftlicher Nachteile ist es daher dringend erwünscht, zusätzliche Verwendungsmöglichkeiten für Glycerin zu erschliessen.

Ein Ziel der vorliegenden Erfindung bestand darin, ein möglichst universelles Verfahren zur Umsetzung von Glyceriden und/oder Carbonsäuren, insbesondere Fettsäuren, zu entwickeln, das zu technisch interessanten Weiterverarbeitungsprodukten führen sollte. Das Verfahren sollte ein möglichst katalysatorfreies Produkt liefern, das direkt und uneingeschränkt weiterverwendet werden kann. Ein weiteres Ziel der Erfindung bestand darin, das zwangsläufig anfallende Glycerin in eine Form zu überführen, in der es sinnvoll verwendet werden kann.

Es wurde jetzt ein Verfahren gefunden, bei dem man Carbonsäurealkylester, insbesondere Fettsäurealkylester, frei von Katalysatorbestandteilen erhält. Dieses Verfahren ist auf alle gängigen fettchemischen Ausgangsprodukte anwendbar. Nach einer besonderen Verfahrensvariante erhält man Gemische aus Fettsäurealkylestern und Glycerinethern, die sich unmittelbar als Dieselkraftstoff eignen. Gegenstand der vorliegenden Erfindung sind die Verfahren nach den Ansprüchen 1 bis 12.

Als Ausgangsprodukte für das erfindungsgemässe Verfahren kommen Triglyceride, Partialglyceride und Fettsäuren in Frage. Dabei ist es nicht erforderlich, dass chemisch einheitliche Ausgangsprodukte eingesetzt werden, vielmehr werden bevorzugt Gemische aus zwei oder drei der aufgeführten Typen von Ausgangssubstanzen eingesetzt. Dazu gehören vor allem die in der Natur vorkommenden Fette und Öle pflanzlichen oder tierischen Ursprungs (s. z. B. J. Baltes «Gewinnung und Verarbeitung von Nahrungsfetten», Verlag P. Parey, Berlin und Hamburg, [1975]) oder Produkte, die durch übliche Verarbeitungsmethoden der Fettchemie, wie z. B. Destillation, Fraktionierung, Raffination oder Kristallisation aus diesem gewonnen werden können.

Typische Vertreter der genannten Fette und Öle sind z. B. Kokosöl, Palmkernöl, Palmöl, Erdnussöl, Baumwollsaatöl, Sojaöl, Sonnenblumenöl, Leinöl, Rüböl, Schmalz, Rindertalg, Heringsöl. Selbstverständlich können auch beliebige Gemische dieser Fette und Öle eingesetzt werden. Das Verfahren gestaltet sich dann besonders vorteilhaft, wenn man Rohprodukte einsetzt. Rohe Fette enthalten im allgemeinen bis zu 10 Gewichtsprozent freie Fettsäuren. In Einzelfällen kommen jedoch auch Partien mit Fettsäuregehalten von 50 Gewichtsprozent und mehr vor. Bedingt durch die Teilhydrolyse des Fettes kann der Anteil der Partialglyceride und des Glycerins ebenfalls sehr hoch sein. Freies Glycerin sowie andere Nebenbestandteile roher Fette stören die Umsetzung nicht.

Gerade die Fette, die für die Herstellung von Speisefett ungeeignet sind, sind ein brauchbarer Rohstoff für das erfindungsgemässe Verfahren.

Besonders typische Vertreter der zur Herstellung von Fettsäurealkylestern verwendbaren Ausgangsgemische sind voll- und teilraffinierte Fette, rohe Fette sowie rohe und destillierte Fettsäuren. Vollraffinierte Fette werden üblicherweise durch Alkaliraffination bzw. durch «physical refining» hergestellt und enthalten weder freie Fettsäuren noch Schleim- und Geruchsstoffe. Halb- oder teilraffinierte Fette werden erhalten, wenn ein oder mehrere bei der Vollraffination übliche Raffinationsstufen entfallen.

Bei handelsüblichen Teilraffinaten wird z. B. auf die Desodorierung verzichtet, man erhält dadurch schleimstoff- und fettsäurefreie sog. Halbraffinate. Eine besonders wirtschaftliche Variante des erfindungsgemässen Verfahrens basiert auf rohen, nicht raffinierten Fetten, die sich von den vorgenannten Teilraffinaten vor allem durch unterschiedlich hohe Gehalte an freien Fettsäuren auszeichnen, deren Zusammensetzung im allgemeinen dem Fettsäuremuster des zugrundeliegenden Triglycerids entspricht.

Auch Fettsäuren, die bei der Dampfspaltung von Fetten, der Aufarbeitung der sogenannten Acid Oils, d. h. Nebenprodukten der Alkaliraffination bzw. des «physical refining» roher Fette anfallen, sind erfindungsgemäss einsetzbar. Dabei spielt es keine Rolle, ob diese Fettsäuren in undestillierter oder destillierter Form vorliegen. Derartige Fettsäuren enthalten in der Regel 6–24 C-Atome und sind meist linear. Sie können eine oder mehrere Doppel- und/oder Dreifachbindungen enthalten und durch Hydroxyl- und Methylgruppen substituiert sein. Sogar die bei der Fettraffination anfallenden Acid Oils bzw. Raffinationsfettsäuren sind ein geeigneter Ausgangsstoff für das erfindungsgemässe Verfahren.

Schliesslich können auch aus der Petrochemie zugängliche Ausgangsmaterialien verwendet werden, sofern sie hinsichtlich ihrer Struktur den in der Natur vorkommenden Carbonsäuren entsprechen. Dazu zählen auch Carbonsäuren mit ungerader C-Zahl und mit verzweigter Kohlenstoffkette, die in der Natur zwar im allgemeinen nicht vorkommen, die aber im gleichen C-Zahl-Bereich von 6–24 liegen und den ersteren chemisch gesehen sehr nahe kommen.

Die zur Herstellung der Fettsäurealkylester verwendbaren Alkohole haben 1–4 C-Atome. Neben den primären Alkoholen Methanol, Ethanol, Propanol-1 und Butanol-1 sind auch deren Isomere Propanol-2, Butanol-2 und tert.-Butanol sowie beliebige Gemische dieser Alkohole verwendbar.

Die Alkohole müssen – bezogen auf die in freier oder gebundener Form vorliegenden Fettsäureanteile – mindestens in stöchiometrischer Menge eingesetzt werden. Zur Erzielung ausreichender Umsätze ist es jedoch vorteilhaft, mit mehr als stöchiometrischen Mengen an Alkoholen zu arbeiten und z. B. die 2–10fache der stöchiometrischen Menge einzusetzen.

Der im vorliegenden Verfahren eingesetzte Katalysator enthält Aluminiumoxid, Eisen-II-, Eisen-III-oxid oder beliebige Gemische dieser Oxide. Seine Oberfläche weist mindestens $10 \, m^2/g$ auf. Sein Porenvolumen liegt vorzugsweise zwischen 0,1 und $0,8 \, cm^3/g$.

Die für das Verfahren brauchbaren Aluminiumoxid-Kontakte können nach an sich bekannten Verfahren, z. B. aus Aluminiumhydroxid, hergestellt werden. Dieses wird nach Peptisierung mit geeigneten organischen oder anorganischen Säuren, wie z. B. Ameisen-, Essig- oder Salpetersäure zu Formkörpern verarbeitet, getrocknet und in einer oder mehreren Stufen zwischen 200 und 1000 °C unter Überleiten von Luft, $N_2$, anderen, inerten Gasen oder Wasserdampf calciniert. Ein besonders geeignetes Verfahren ist in der deutschen Patentschrift 10 58 026 beschrieben. Ein nach diesem Verfahren hergestellter Kontakt enthält zwischen 0,1 und 1% Natrium (berechnet als $Na_2O$ und Spuren an Kalium sowie Erdalkalimetallen. Kontakte mit relativ grösserer Oberfläche lassen sich durch vergleichsweise niedrige Calcinierungstemperaturen und Überleiten von inerten Gasen erhalten. Kontakte mit kleinerer Oberfläche werden erhalten, wenn man das Material bei hohen Temperaturen mit Waserdampf behandelt. Ein solcher Kontakt mit einer Oberfläche von 10 m²/g und der Bezeichnung SCS 9 wird in Beispiel 20 eingesetzt. Die Messung der Porenvolumina erfolgt in einfacher Weise durch Ermittlung der vom Katalyatorkorn absorbierten Menge Wasser nach der BET-Methode.

Auch der Eisenoxidkontakt kann nach üblichen, an sich bekannten Verfahren hergestellt werden. Übliche Ausgangsstoffe sind z. B. Eisen-II- oder -III-sulfat oder -nitrat, aus denen Eisen in Form des Hydroxids durch Zugabe von Natriumhydroxid, Soda, Pottasche oder Ammoniak gefällt werden kann. Der Niederschlag kann, wie in der DE-PS 10 58 026 beschrieben, peptisiert werden. Nach dem Waschen des Niederschlags wird der Rückstand getrocknet und z. B. zu Tabletten verformt. Die Calcinierung findet bei 250–1000 °C statt und liefert einen Kontakt, der im wesentlichen aus Fe₂0₃ besteht, dessen Wirksamkeit aber durch Anteile an Fe₃0₄ nicht beeinträchtigt wird.

Aluminiumoxid-Eisenoxid-Mischkontakte können auch durch Copräzipitation von A1- und Fe-Salzen hergestellt werden (vgl. Beispiel 24). Ein günstiges Ausgangsmaterial ist die Rotmasse, ein bei der Bauxitherstellung anfallendes Nebenprodukt, das überwiegend Eisenoxid, aber auch geringe Mengen Aluminiumoxid enthält. Schliesslich ist es auch möglich, die Mischkontakte dadurch herzustellen, dass man feinteiliges Aluminium- und Eisenoxid mischt (vgl. Beispiel 23).

Die Kontakte können unter Verwendung von Bindemitteln wie Graphit, Zirkoniumdioxid, Titandioxid etc. hergestellt werden. Wirksam sind auch Kontakte, bei denen der aktive Bestandteil auf einen inerten Träger, wie z. B. Eisen, Korund oder Siliciumdioxid aufgebracht wird (vgl. Beispiel 22).

Die möglichen Kontaktbelastungen liegen zwischen 0,05 l und 3 l Ausgangsgemisch pro l Kontakt. Unter Einhaltung dieser Bedingungen sowie bei Beachtung der übrigen Reaktionsparameter werden Umsätze zu Fettsäurealkylestern von mehr als 95% erzielt. Die mechanische und chemische Stabilität des Kontaktes ist hierbei gewährleistet.

Für die praktische Durchführung der Umsetzung sind verschiedene Reaktorkonzepte möglich. Als besonders einfach hat sich die Durchführung der Reaktion in einem mit Katalysator gefüllten Rohr erwiesen, bei dem das Verhältnis zwischen Länge und Durchmesser zwischen 10:1 bis 100:1 beträgt.

Die Einsatzstoffe können gemeinsam am Anfang des Reaktionsrohres im Gleichstrom eingespeist werden; es ist aber auch möglich, den Alkohol in Art einer Kreuzstromfahrweise an zwei oder mehreren Stellen über die Länge des Reaktors verteilt einzuspeisen.

Das Reaktionsgemisch wird nach Verlassen des Reaktors zweckmässigerweise zunächst destillativ vom unumgesetzten Alkohol befreit. Beim Einsatz von Glyceriden und glycerinhaltigen Ausgangsstoffen kommt es, vorzugsweise bei leicht erhöhter Temperatur (bis etwa 100 °C, zu einer sauberen Trennung in eine obere Carbonsäureesterphase und eine untere Glycerinphase.

Für das erfindungsgemässe Verfahren gibt es zwei Varianten, je nachdem, ob man bei Temperaturen bis 280 °C oder über 280 °C arbeitet.

Im ersteren Fall (I) besteht das Reaktionsprodukt ganz überwiegend aus Fettsäurealkylestern und Glycerin, sofern von Glyceriden ausgegangen wird.

Setzt man nur Partial- und Triglyceride, also fettsäurefreie Ausgangsprodukte ein, so liegen die günstigsten Reaktionstemperaturen zwischen 210 und 280 °C, vorzugsweise zwischen 225 und 260 °C, und das Reaktionsprodukt enthält höchstens Spuren von Glycerinethern.

Setzt man hingegen überwiegend Fettsäuren oder analoge Carbonsäuren ein, so liegt die Veresterungstemperatur vorzugsweise zwischen 160 und 220 °C. Die besten Ergebnisse werden bei Temperaturen zwischen 190 und 210 °C erzielt.

In allen Fällen erzielt man eine höhere Produktqualität (niedrigere Säurezahl, geringeren Glyceringehalt) und einen verbesserten Umsatz, wenn man die Umsetzung in mehreren Stufen, vorzugsweise in zwei oder drei Stufen, durchführt. Vorzugsweise wird nach jeder Stufe das sich zwischenzeitlich gebildete Wasser zusammen mit dem Alkohol abdestilliert und die sich ausbildende Glycerinphase abgetrennt.

Vor dem Einsatz in die nächste Stufe wird den nur teilweise umgesetzten Ausgangsprodukten frischer Alkohol zugesetzt.

Eine besonders günstige Vorgehensweise ist die 2stufige Reaktionsführung, wobei die erste Stufe bei 215–280 °C, vorzugsweise 225–260°, und Drucken bis zu 150 bar und die zweite Reaktionsstufe bei Temperaturen von 160–210 °C, vorzugsweise zwischen 190 und 210 °C, und Drucken bis 70 bar durchgeführt wird. Vorzugsweise sollten die Ausgangsstoffe solange in der ersten Stufe bleiben, bis eine Umsetzung von mehr als 80% erfolgt ist. Der Grad der Umsetzung lässt sich beispielsweise durch gaschromatographische Analyse in Gegenwart eines inneren Standards ermitteln.

Im folgenden soll die Verfahrensvariante (II) beschrieben werden, bei der die Reaktionstemperatur über 280 °C liegt. Die maximale Umsetzungstemperatur liegt in diesem Falle bei 400 °C, der maximal aufzuwendende Druck beträgt 400 bar. In diesem Falle enthält das Reaktionsgemisch keine eigene Glycerinphase. Vielmehr entstehen unter diesen Bedingungen Mono-, Di- und Trialkylether des Glycerins, wobei der Anteil der vollständig veretherten Glycerinderivate mit steigender Reaktionstemperatur zunimmt.

Das homogene Ester/Ether-Gemisch kann als solches zur Verdieselung eingesetzt werden. Zur Verminderung evtl. störender Restgehalte an freier Fettsäure kann es jedoch zweckmässig sein, das Reaktionsgemisch nach oder vor der Entfernung des überschüssigen Alkanols und des gebildeten Wassers in Gegenwart von Frischalkanol bei einer Reaktionstemperatur zwischen 160 und 230 °C, vorzugsweise 185–215 °C, einer Nachreaktion in Gegenwart der für die Hauptreaktion verwendbaren Katalysatoren zu unterziehen. Das für die Nachreaktion erforderliche Reaktionsvolumen beträgt im allgemeinen 5–50% des gesamten mit Katalysator gefüllten Reaktionsraumes.

Die Verfahrensweise mit Nachreaktion bei verminderter Temperatur kann prinzipiell unter Benutzung des gleichen Reaktors und der gleichen Aufarbeitungselemente durchgeführt werden, wobei allerdings zusätzliche Heiz- und Kühleinrichtungen anzubringen sind, die die Einstellung zweier Temperaturzonen im Reaktor gestatten. Die Nachreaktion kann selbstverständlich auch in einem getrennten Reaktor, der dem Hauptreaktor nachgeschaltet ist, vorgenommen werden. Besonders günstige Ergebnisse werden erzielt, wenn vor der Nachreaktion überschüssiges Alkanol und in geringer Menge vorhandenes Wasser entfernt werden und der Rückstand unter Zusatz mindestens stöchiometrischer Mengen Alkohol – bezogen auf die in freier oder gebundener Form vorliegenden Fettsäuren – erneut in die Nachreaktion eingesetzt wird.

Bei allen Verfahrensvarianten liegt der Gehalt an Eisen und/oder Aluminium im Reaktionsprodukt unter 5 ppm.

Beispiel 1

Ein aufrecht stehendes, von aussen beheizbares Reaktionsrohr aus Edelstahl (Innendurchmesser 8 cm, Länge 200 cm) von 10 l Inhalt, das mit Formkörpern aus Aluminiumoxid (es handelt sich um die Verkaufstype H 0408, Hersteller: Chemische Werke Hüls AG, D-4370 Marl, siehe entsprechendes Merkblatt der Katalysatorenwerke Houdry-Hüls GmbH, D-4370 Marl) gefüllt ist, wird von oben mit 800 g/h rohem Palmfett und 600 g/h Methanol kontinuierlich beschickt. Bei einer Reaktionstemperatur von 250 °C stellt sich ein Druck von 68 bar ein. Nach dem Verlassen der Reaktionszone wird das Reaktionsgemisch mit Hilfe eines Dünnschichtverdampfers (210 °C, 1 bar) kontinuierlich in ein Methanol und Wasser enthaltendes Destillat und einen Sumpf zerlegt, der sich bei 60 °C in eine obere Palmfettsäuremethylesterphase und eine untere Glycerinphase trennt. Die beiden Phasen werden dem Abscheider entnommen. Der Umsatz wird durch GC-Analyse mit innerem Standard bestimmt.

Beispiele 2 bis 18

Diese Beispiele werden analog zu Beispiel 1 durchgeführt. Die Einsatzstoffe, ihre Mengen sowie die Reaktionsbedingungen können aus der Tabelle entnommen werden. In den Fällen, in denen ausschliesslich Fettsäuren eingesetzt werden (Beispiele 5, 15), fällt bei der destillativen Aufarbeitung des Reaktionsgemisches keine Glycerinphase an.

Beispiele 19 bis 24

Analog zu Beispiel 1 werden Versuche mit anderen Katalysatoren durchgeführt. Die Mengen der Einsatzstoffe und die Reaktionsbedingungen sind der Tabelle zu entnehmen.
Der Katalysator vom Typ H 0407 wird ebenso wie der Typ H 0408 von den Chemischen Werken Hüls AG, D-4370 Marl, hergestellt. Die Eigenschaften dieses Katalysators sind dem bereits erwähnten Merkblatt der Katalysatorenwerke Houdry-Hüls GmbH, D-4370 Marl, zu entnehmen.
Der Katalysator vom Typ SCS 9 wird von der Fa. Rhone-Poulenc hergestellt. Ein Merkblatt unter dem Titel «Rhone-Poulenc Spécialités, spheralit catalyst carriers, technical documentation 81/1/3» ist erhältlich bei: Rhone-Poulenc Industries, Division Spécialités chimiques, F-75 360 Paris, Cedex: 08.

Beispiel 25

Beispiel 2 wird mit der Ausnahme wiederholt, dass das Methanol nicht nur am Anfang des Reaktors, sondern in Art einer Kreuzstromfahrweise an drei verschiedenen Stellen des Reaktors zugeführt wird: 400 g/h am Anfang, 400 g/h nach 70 cm Rohrlänge, 400 g/h nach 140 cm Rohrlänge.

Beispiel 26

Beispiel 1 wird mit der Ausnahme wiederholt, dass das Reaktionsrohr in zwei Reaktoren von je 100 cm Länge geteilt und nach dem ersten Teilreaktor bereits eine destillative Aufarbeitung vorgenommen wird. Während unverändert 800 g/h rohes Palmöl in den ersten Teilreaktor eingespeist werden, wird die Methanolmenge wie folgt aufgeteilt: 400 g/h in den ersten Teilreaktor und 200 g/h in den zweiten Teilreaktor.

Die Aufarbeitung nach dem ersten Teilreaktor wird ebenso wie die nach dem zweiten Teilreaktor mit Hilfe eines Dünnschichtverdampfers (210 °C, 1 bar) vorgenommen. Die erste Aufarbeitung liefert als Destillat Methanol mit geringen Mengen Wasser und als Sumpf ein sich in zwei Phasen trennendes Gemisch aus teilumgesetztem Palmöl (oben) und Glycerin (unten). Die obere Phase aus teilumgesetztem Palmöl wird, zusammen mit frischem Methanol, dem zweiten Teilreaktor zugeführt.

Nach Verlassen des zweiten Teilreaktors wird das Reaktionsgemisch wie üblich aufgearbeitet. Die aus der ersten und zweiten Aufarbeitung stammenden Glycerinphasen werden vereinigt. Die jeweils als Destillat erhaltenen wasserhaltigen Methanolfraktionen können nach entsprechender Reinigung wieder in die Reaktion eingesetzt werden. Der als obere Sumpfphase bei der zweiten Aufarbeitung anfallende Palmfettsäuremethylester wird wie üblich analysiert.

Beispiel 27

Beispiel 26 wird mit der Ausnahme wiederholt, dass anstelle rohen Palmöls die gleiche Gewichtsmenge destillierter Palmfettsäure eingesetzt und in beiden Teilreaktoren eine Temperatur von 200 °C eingehalten wird. Im Gegensatz zu Beispiel 26 fällt bei beiden Aufarbeitungsschritten kein Glycerin an.

Beispiel 28

Beispiel 27 wird mit der Ausnahme wiederholt, dass anstelle destillierter Palmfettsäure die gleiche Gewichtsmenge roher Kokosfettsäure eingesetzt wird.

**Beispiel 29**

Beispiel 28 wird mit der Ausnahme wiederholt, dass anstelle des Aluminiumoxidkontaktes H 0408 der $Fe_2O_3$-Kontakt von Beispiel 21 eingesetzt wird.

**Beispiel 30**

Beispiel 26 wird mit der Ausnahme wiederholt, dass im 2. Teilreaktor eine Temperatur von nur 210 °C eingehalten wird.

**Beispiele 31 bis 34**

Beispiel 30 wird mit der Ausnahme wiederholt, dass anstelle rohen Palmöls halbraffiniertes Palmöl, raffiniertes Palmöl, rohes Kokosöl bzw. Talg-Monoglycerid eingesetzt werden.

**Beispiele 35 bis 38**

Beispiele 31 bis 34 werden mit der Ausnahme wiederholt, dass anstelle des $Al_2O_3$-Kontaktes H 0408 der Mischkontakt ($Al_2O_3$ + $Fe_2O_3$) von Beispiel 23 eingesetzt wird.

**Beispiel 39**

Beispiel 30 wird mit der Ausnahme wiederholt, dass eine andere Aufteilung des Reaktionsraumes auf den 1. und 2. Teilreaktor vorgenommen wird: Auf den ersten Teilreaktor entfallen nunmehr 75% des Gesamtvolumens (Länge = 1,5 m), auf den zweiten 25% (Länge 0,5 m).

**Beispiel 40**

Beispiel 39 wird mit der Ausnahme wiederholt, dass anstelle rohen Palmöls ein Acid Oil auf Palmkernbasis eingesetzt wird. Der Versuch wird über eine Dauer von 100 Tagen betrieben. Auch nach 100 Tagen werden noch die gleichen Umsetzungsergebnisse wie zu Beginn erhalten.

**Beispiel 41**

Beispiel 39 wird mit der Ausnahme wiederholt, dass nach dem ersten Teilreaktor auf eine destilla-tive Aufarbeitung des Reaktionsgemisches ver-zichtet wird.

**Beispiel 42**

Beispiel 41 wird mit der Ausnahme wiederholt, dass Methanol nicht in zwei Strömen (400 g/h und 200 g/h), sondern in einem Strom zu Beginn des ersten Teilreaktors (600 g/h) zugesetzt wird.

**Beispiel 43**

Beispiel 1 wird mit der Ausnahme wiederholt, dass eine Reaktionstemperatur von 285 °C eingehalten wird. Es fällt keine Glycerinphase an.

**Beispiele 44 und 45**

Beispiel 43 wird mit halbraffiniertem Palmfett bzw. fancy bleachable Talg wiederholt. Es fallen keine Glycerinphasen an.

**Beispiel 46**

Beispiel 41 wird mit der Ausnahme wiederholt, dass im 1. Teilreaktor eine Temperatur von 320 °C eingehalten wird.

**Beispiel 47**

Beispiel 46 wird mit der Ausnahme wiederholt, dass nach dem 1. Teilreaktor eine destillative Auf-arbeitung des Reaktionsgemisches unter Aus-schleusung des hierbei anfallenden Methanol/Wasser-Destillats vorgenommen wird. Eine Glycerinphase fällt hierbei nicht an.

**Beispiel 48**

Beispiel 47 wird mit Acid Oil auf Palmkernbasis anstelle rohen Palmöls wiederholt.

**Beispiele 49 und 50**

Beispiel 48 wird mit der Ausnahme wiederholt, dass anstelle des $Al_2O_3$-Kontaktes H 0408 ein $Fe_2O_3$-Kontakt (Beispiel 21) bzw. ein $Al_2O_3/Fe_2O_3$-Mischkontakt (Beispiel 23) eingesetzt wird.

| Beisp. Nr. | Einsatzstoff Herkunft | Qualität | (g/h) | Alkanol Art | (g/h) | Kat.-typ | Temp. (°C) | Druck (bar) | Ums. (%) | Glyc. (g/h) | Ester (g/h) |
|---|---|---|---|---|---|---|---|---|---|---|---|
| 1 | Palm | Rohfett | 800 | MeOH | 600 | $Al_2O_3$/H0408 | 250 | 68 | 98.5 | 56 | 810 |
| 2 | Palm | Halbraffinat | 1600 | MeOH | 1200 | $Al_2O_3$/H0408 | 240 | 67 | 97.5 | 115 | 1605 |
| 3 | Palm | raff. Fett | 400 | MeOH | 300 | $Al_2O_3$/H0408 | 250 | 68 | 99 | 30 | 400 |
| 4 | Talg | Monogly. (45%) | 800 | MeOH | 600 | $Al_2O_3$/H0408 | 240 | 68 | 98.5 | 130 | 685 |
| 5 | Kokos | dest. Fett | 800 | MeOH | 600 | $Al_2O_3$/H0408 | 210 | 65 | 98.5 | – | 842 |
| 6 | Palm | Rohfett mit 25 Gew.-% FFA | 800 | MeOH | 600 | $Al_2O_3$/H0408 | 235 | 67 | 98 | 57 | 805 |
| 7 | Palm | Rohfett mit 45 Gew.-% FFA | 800 | MeOH | 600 | $Al_2O_3$/H0408 | 235 | 67 | 98 | 55 | 803 |
| 8 | Palmkern | Rohfett | 800 | MeOH | 800 | $Al_2O_3$/H0408 | 240 | 66 | 99 | 70 | 810 |
| 9 | Kokos | Rohfett | 800 | MeOH | 400 | $Al_2O_3$/H0408 | 240 | 66 | 97 | 72 | 802 |
| 10 | Talg | fancy bleachable | 800 | MeOH | 600 | $Al_2O_3$/H0408 | 250 | 68 | 98 | 60 | 805 |
| 11 | Soja | Rohfett | 800 | MeOH | 600 | $Al_2O_3$/H0408 | 250 | 68 | 98 | 62 | 803 |
| 12 | Rüböl | Rohfett | 800 | MeOH | 600 | $Al_2O_3$/H0408 | 240 | 66 | 98 | 65 | 797 |
| 13 | Sonnenblume | Rohfett | 1600 | MeOH | 1200 | $Al_2O_3$/H0408 | 240 | 66 | 97 | 129 | 1603 |
| 14 | Palm | rohe Fetts. | 800 | MeOH | 600 | $Al_2O_3$/H0408 | 200 | 64 | 98.5 | 6 | 840 |
| 15 | Rüböl | dest. Fetts. | 800 | MeOH | 600 | $Al_2O_3$/H0408 | 200 | 64 | 98 | – | 837 |
| 16 | Palm | Rohfett | 800 | EtOH | 600 | $Al_2O_3$/H0408 | 240 | 66 | 97 | 54 | 846 |
| 17 | Palm | Rohfett | 800 | BuOH | 800 | $Al_2O_3$/H0408 | 250 | 68 | 95.5 | 53 | 929 |

| Beisp. Nr. | Herkunft | Qualität | (g/h) | Art | (g/h) | Kat.-typ | Temp. (°C) | Druck (bar) | Ums. (%) | Glyc. (g/h) | Ester (g/h) |
|---|---|---|---|---|---|---|---|---|---|---|---|
| 18 | Kokos | Monoglyc. (55% Mono) | 800 | PrOH | 800 | $Al_2O_3$/H0408 | 240 | 66 | 98.5 | 158 | 655 |
| 19 | Palm | Rohfett | 1600 | MeOH | 800 | $Al_2O_3$/H0407 | 240 | 66 | 98 | 113 | 1614 |
| 20 | Palm | Rohfett | 1600 | MeOH | 1200 | $Al_2O_3$/SCS9 | 250 | 68 | 98 | 115 | 1613 |
| 21 | Palm | Rohfett | 800 | MeOH | 800 | $Fe_2O_3$ | 250 | 68 | 98 | 57 | 805 |
| 22 | Palm | Rohfett | 1600 | MeOH | 1600 | $Fe_2O_3$/Fe | 240 | 66 | 99 | 112 | 1611 |
| 23 | Palm | Rohfett | 800 | MeOH | 400 | $Al_2O_3+Fe_2O_3$ | 240 | 66 | 96.5 | 55 | 802 |
| 24 | Palm | Rohfett | 1200 | MeOH | 800 | Al, Fe-oxid. Kopräzipitat. | 250 | 68 | 98 | 83 | 1213 |
| 25 | Palm | Halbraffinat | 1600 | MeOH | 3×400 | $Al_2O_3$/H0408 | 240 | 67 | 97.8 | 110 | 1608 |
| 26 | Palm | Rohfett | 800 | MeOH | 400 +200 | $Al_2O_3$/H0408 | 250 | 68 | 99.2 | 60 | 805 |
| 27 | Palm | dest. Fetts. | 800 | MeOH | 400 +200 | $Al_2O_3$/H0408 | 200 | 63 | 99 | – | 837 |
| 28 | Kokos | rohe Fetts. | 800 | MeOH | 400 +200 | $Al_2O_3$/H0408 | 200 | 63 | 98.5 | 5 | 840 |
| 29 | Kokos | rohe Fetts. | 800 | MeOH | 400 +200 | $Fe_2O_3$ | 200 | 63 | 98.5 | 5 | 842 |
| 30 | Palm | Rohfett | 800 | MeOH | 400 +200 | $Al_2O_3$/H0408 | 250/210 | 68/65 | 99.5 | 62 | 806 |
| 31 | Palm | Halbraffinat | 800 | MeOH | 400 +200 | $Al_2O_3$/H0408 | 250/210 | 68/65 | 99.5 | 63 | 807 |
| 32 | Palm | raff. Fett | 800 | MeOH | 400 +200 | $Al_2O_3$/H0408 | 250/210 | 68/65 | 99.5 | 62 | 805 |
| 33 | Kokos | Rohfett | 800 | MeOH | 400 +200 | $Al_2O_3$/H0408 | 250/210 | 68/65 | 99.5 | 74 | 805 |
| 34 | Talg | Monoglyc. (45%) | 800 | MeOH | 400 +200 | $Al_2O_3$/H0408 | 250/210 | 68/65 | 99 | 132 | 690 |
| 35 | Palm | Halbraffinat | 800 | MeOH | 400 +200 | $Al_2O_3+Fe_2O_3$ | 250/210 | 68/65 | 99.5 | 63 | 806 |
| 36 | Palm | raff. Fett | 800 | MeOH | 400 +200 | $Al_2O_3+Fe_2O_3$ | 250/210 | 68/65 | 99.5 | 62 | 805 |
| 37 | Kokos | Rohfett | 800 | MeOH | 400 +200 | $Al_2O_3+Fe_2O_3$ | 250/210 | 68/65 | 99.5 | 73 | 804 |
| 38 | Talg | Monoglyc. (45%) | 800 | MeOH | 400 +200 | $Al_2O_3+Fe_2O_3$ | 250/210 | 68/65 | 99 | 130 | 688 |
| 39 | Palm | Rohfett | 800 | MeOH | 400 +200 | $Al_2O_3$/H0408 | 250/210 | 68/65 | 99.5 | 64 | 808 |
| 40 | Palmkern | Acid Oil | 800 | MeOH | 400 +200 | $Al_2O_3$/H0408 | 250/210 | 68/65 | 99.5 | 72 | 805 |
| 41 | Palm | Rohfett | 800 | MeOH | 400 +200 | $Al_2O_3$/H0408 | 250/210 | 68/65 | 99 | 62 | 808 |
| 42 | Palm | Rohfett | 800 | MeOH | 600 | $Al_2O_3$/H0408 | 250/210 | 68/65 | 99 | 62 | 807 |
| 43 | Palm | Rohfett | 800 | MeOH | 600 | $Al_2O_3$/H0408 | 285/210 | 70/65 | 98.0 | – | 860 |
| 44 | Palm | Halbraffinat | 800 | MeOH | 600 | $Al_2O_3$/H0408 | 285/210 | 70/65 | 98.0 | – | 862 |
| 45 | Talg | fancy bleachable | 800 | MeOH | 600 | $Al_2O_3$/H0408 | 285/210 | 70/65 | 98.0 | – | 857 |
| 46 | Palm | Rohfett | 800 | MeOH | 400 +200 | $Al_2O_3$/H0408 | 320/210 | 73/65 | 98.5 | – | 865 |
| 47 | Palm | Rohfett | 800 | MeOH | 400 +200 | $Al_2O_3$/H0408 | 320/210 | 73/65 | 99 | – | 866 |
| 48 | Palmkern | Acid Oil | 800 | MeOH | 400 +200 | $Al_2O_3$/H0408 | 320/210 | 73/65 | 99 | – | 875 |
| 49 | Palmkern | Acid Oil | 800 | MeOH | 400 +200 | $Fe_2O_3$ | 320/210 | 73/65 | 99 | – | 870 |
| 50 | Palmkern | Acid Oil | 800 | MeOH | 400 +200 | $Al_2O_3+Fe_2O_3$ | 320/210 | 73/65 | 99 | – | 872 |

| Beisp. Nr. | Analysendaten Ester | | | | | |
|---|---|---|---|---|---|---|
| | Reinheit % | SZ mg KOH/g | % Glyc. | % $H_2O$ | % Alkanol | ppm Kat. Metall |
| 1 | 97.0 | 1.4 | 0.3 | < 0.01 | 0.2 | < 5 |
| 2 | 96.1 | 1.2 | 0.3 | < 0.01 | 0.3 | < 5 |
| 3 | 97.7 | 1.4 | 0.3 | < 0.01 | 0.2 | < 5 |
| 4 | 97.3 | 1.2 | 0.4 | < 0.01 | 0.2 | < 5 |
| 5 | 97.1 | 1.6 | – | < 0.01 | 0.2 | < 5 |
| 6 | 96.5 | 1.4 | 0.2 | < 0.01 | 0.3 | < 5 |
| 7 | 96.5 | 1.6 | 0.1 | < 0.01 | 0.3 | < 5 |
| 8 | 97.4 | 2.0 | 0.3 | < 0.01 | 0.3 | < 5 |
| 9 | 95.5 | 1.8 | 0.3 | < 0.01 | 0.3 | < 5 |
| 10 | 96.3 | 2.2 | 0.4 | < 0.01 | 0.2 | < 5 |
| 11 | 97.0 | 1.2 | 0.2 | < 0.01 | 0.2 | < 5 |
| 12 | 96.6 | 1.6 | 0.2 | < 0.01 | 0.2 | < 5 |
| 13 | 95.8 | 1.0 | 0.4 | < 0.01 | 0.3 | < 5 |
| 14 | 96.6 | 2.4 | 0.2 | < 0.01 | 0.3 | < 5 |
| 15 | 96.5 | 1.6 | – | < 0.02 | 0.2 | < 5 |
| 16 | 95.9 | 1.4 | 0.2 | < 0.01 | 0.4 | < 5 |
| 17 | 93.5 | 2.6 | 0.5 | < 0.01 | 0.6 | < 5 |
| 18 | 97.3 | 2.0 | 0.4 | < 0.01 | 0.4 | < 5 |
| 19 | 96.8 | 1.4 | 0.2 | < 0.01 | 0.4 | < 5 |
| 20 | 96.7 | 1.4 | 0.2 | < 0.01 | 0.3 | < 5 |
| 21 | 96.7 | 1.6 | 0.3 | < 0.01 | 0.2 | < 5 |
| 22 | 97.9 | 1.2 | 0.2 | < 0.01 | 0.2 | < 5 |
| 23 | 94.5 | 2.4 | 0.4 | < 0.01 | 0.1 | < 5 |
| 24 | 96.8 | 1.8 | 0.3 | < 0.01 | 0.3 | < 5 |
| 25 | 96.2 | 1.0 | 0.4 | < 0.01 | 0.2 | < 5 |
| 26 | 97.9 | 1.2 | 0.2 | < 0.01 | 0.2 | < 5 |
| 27 | 98.0 | 0.5 | 0.1 | < 0.01 | 0.2 | < 5 |
| 28 | 97.6 | 0.6 | 0.2 | < 0.01 | 0.2 | < 5 |
| 29 | 97.5 | 0.6 | 0.2 | < 0.01 | 0.2 | < 5 |
| 30 | 98.5 | 0.6 | 0.3 | < 0.01 | 0.1 | < 5 |
| 31 | 98.6 | 0.5 | 0.3 | < 0.01 | 0.2 | < 5 |
| 32 | 98.8 | 0.5 | 0.2 | < 0.01 | 0.1 | < 5 |
| 33 | 98.8 | 0.5 | 0.2 | < 0.01 | 0.1 | < 5 |
| 34 | 98.5 | 0.6 | 0.1 | < 0.01 | 0.1 | < 5 |
| 35 | 98.7 | 0.6 | 0.2 | < 0.01 | 0.1 | < 5 |
| 36 | 98.7 | 0.5 | 0.1 | < 0.01 | 0.1 | < 5 |
| 37 | 98.6 | 0.5 | 0.2 | < 0.01 | 0.1 | < 5 |
| 38 | 98.4 | 0.6 | 0.1 | < 0.01 | 0.1 | < 5 |
| 39 | 98.9 | 0.4 | 0.1 | < 0.01 | 0.1 | < 5 |
| 40 | 98.5 | 0.4 | 0.1 | < 0.01 | 0.1 | < 5 |
| 41 | 98.4 | 0.7 | 0.1 | < 0.01 | 0.2 | < 5 |
| 42 | 98.3 | 0.8 | 0.3 | < 0.01 | 0.1 | < 5 |
| 43 | 88.2 | 5.1 | 1.6 | < 0.02 | 0.1 | < 5 |
| 44 | 88.5 | 4.7 | 1.5 | < 0.02 | 0.1 | < 5 |
| 45 | 88.4 | 4.9 | 1.5 | < 0.01 | 0.1 | < 5 |
| 46 | 88.2 | 1.5 | 0.6 | < 0.01 | 0.1 | < 5 |
| 47 | 88.0 | 0.6 | 0.5 | < 0.01 | 0.1 | < 5 |
| 48 | 86.3 | 0.7 | 0.4 | < 0.02 | 0.1 | < 5 |
| 49 | 86.0 | 0.6 | 0.5 | < 0.01 | 0.1 | < 5 |
| 50 | 86.2 | 0.5 | 0.4 | < 0.01 | 0.1 | < 5 |

**Analysendaten zu den in den Beispielen 1–26 eingesetzten fettstämmigen Rohstoffen:**

## 1. Fette:

| Einsatzstoff | | EZ mg KOH/g | SZ mg KOH/g | JZ gJ/100 g | Glyc. (%) | $H_2O$ (%) | GC-Analyse (%) | | | | | | |
|---|---|---|---|---|---|---|---|---|---|---|---|---|---|
| Herkunft | Qualität | | | | | | < $C_{12}$ | $C_{12}$ | $C_{14}$ | $C_{16}$ | $C_{18}$ | < $C_{18}$ | Rest |
| Palm | roh | 184.1 | 8.5 | 52.3 | 10.7 | 0.20 | 0.0 | 0.4 | 1.1 | 44.3 | 52.7 | 1.0 | 0.5 |
| Palm | halbraffiniert | 193.4 | 0.2 | 51.6 | 11.1 | 0.04 | 0.0 | 0.0 | 0.7 | 47.6 | 50.1 | 0.1 | 1.5 |
| Palm | raffiniert | 198.6 | 0.1 | 51.0 | 11.4 | 0.03 | 0.2 | 0.4 | 1.0 | 45.9 | 51.5 | 0.8 | 0.2 |

| Einsatzstoff | | EZ | SZ | JZ | Glyc. | $H_2O$ | GC-Analyse (%) | | | | | | |
| Herkunft | Qualität | mg KOH/g | mg KOH/g | gJ/100 g | (%) | (%) | $<C_{12}$ | $C_{12}$ | $C_{14}$ | $C_{16}$ | $C_{18}$ | $<C_{18}$ | Rest |
|---|---|---|---|---|---|---|---|---|---|---|---|---|---|
| Palm | 22.5% FFA | 151.2 | 44.0 | 51.5 | 10.8 | 0.35 | 0.0 | 0.3 | 1.0 | 46.2 | 50.5 | 0.5 | 1.5 |
| Palm | 45% FFA | 107.0 | 88.3 | 50.7 | 10.6 | 0.47 | 0.0 | 0.4 | 0.8 | 46.2 | 51.0 | 0.7 | 0.9 |
| Palmkern | roh | 231.1 | 11.3 | 18.1 | 12.5 | 0.07 | 7.4 | 46.9 | 16.6 | 8.6 | 20.0 | 0.3 | 0.2 |
| Palmkern | Acid Oil | 58.0 | 171.2 | 22.4 | 4.7 | 0.66 | 6.5 | 47.3 | 16.9 | 9.9 | 18.7 | 0.2 | 0.5 |
| Kokos | roh | 245.8 | 10.1 | 10.0 | 13.4 | 0.11 | 15.1 | 44.6 | 18.6 | 9.6 | 10.9 | 0.3 | 0.9 |
| Talg | fancy bleachable | 188.8 | 9.3 | 51.6 | 10.1 | 0.54 | 0.2 | 0.2 | 3.0 | 33.3 | 55.3 | 2.9 | 5.1 |
| Soja | roh | 180.1 | 11.8 | 135 | 10.2 | 0.15 | 0.3 | 0.0 | 0.1 | 11.8 | 79.0 | 5.4 | 3.4 |
| Rüböl | roh | 181.2 | 10.0 | 118 | 10.0 | 0.33 | 0.3 | 0.0 | 0.0 | 4.9 | 90.7 | 2.1 | 2.0 |
| Sonnenblume | roh | 179.3 | 10.4 | 136 | 10.1 | 0.24 | 0.0 | 0.0 | 0.1 | 7.0 | 90.2 | 1.5 | 1.2 |

## 2. Fettsäuren:

| | | | | | | | | | | | | | |
|---|---|---|---|---|---|---|---|---|---|---|---|---|---|
| Palm | undestilliert | 15.6 | 195.5 | 48.0 | 1.3 | 0.39 | 0.0 | 0.3 | 0.4 | 41.4 | 54.1 | 1.4 | 2.4 |
| Kokos | destilliert | 3.1 | 261.8 | 15 | 0.1 | 0.03 | 8.5 | 47.7 | 18.9 | 10.1 | 14.4 | 0.3 | 0.1 |
| Rüböl | destilliert | 3.5 | 200.6 | 115 | <0.1 | 0.08 | 0.1 | 0.0 | 0.1 | 5.8 | 90.4 | 2.2 | 1.4 |

## 3. Monoglyceride:

| Einsatzstoff | | Glyceridvert.% | | | EZ | SZ | Glyc. | $H_2O$ | GC-Analyse (%) | | | | | | |
| Herkunft | Qualität | Mono | Di | Tri | mg KOH/g | mg KOH/g | (%) | (%) | $<C_{12}$ | $C_{12}$ | $C_{14}$ | $C_{16}$ | $C_{18}$ | $>C_{18}$ | Rest |
|---|---|---|---|---|---|---|---|---|---|---|---|---|---|---|---|
| Talg | gehärtet | 45 | 40 | 15 | 180.1 | 2.4 | 20.0 | 0.35 | 0.3 | 1.1 | 0.7 | 12.2 | 84.0 | 1.0 | 0.7 |
| Kokos | gehärtet | 55 | 35 | 10 | 221.7 | 0.3 | 24.0 | 0.31 | 7.6 | 67.8 | 11.1 | 5.0 | 7.5 | 0.4 | 1.6 |

**Analytische Daten zu den Beispielen 43–50:**

Gehalt der Reaktionsprodukte an Glycerin und Glycerinethern in Gew.-%*

| Beispiel Nr. | Glycerin | Monoether | | Diether | Triether | Σ Mono, Di, Tri-Ether |
| | | 1.-Ether | 2.-Ether | | | |
|---|---|---|---|---|---|---|
| 43 | 14.8 | 28.2 | 11.8 | 29.7 | 15.5 | 85.2 |
| 44 | 15.3 | 27.5 | 12.0 | 29.5 | 15.7 | 84.7 |
| 45 | 15.0 | 26.5 | 13.0 | 30.4 | 15.1 | 85.0 |
| 46 | 16.8 | 31.7 | 13.6 | 32.0 | 15.9 | 93.2 |
| 47 | 15.0 | 32.0 | 14.4 | 32.9 | 15.7 | 95.0 |
| 48 | 15.2 | 31.5 | 14.3 | 32.8 | 16.2 | 94.8 |
| 49 | 15.7 | 31.5 | 13.8 | 32.5 | 16.5 | 94.3 |
| 50 | 15.0 | 32.9 | 14.8 | 32.0 | 15.3 | 95.0 |

* Σ Glycerin + Glycerinderivate = 100%

Tab.: Vergleich einiger Stoffeigenschaften von Diesel, Rübölmethylester und Glycerinether enthaltendem Palmölmethylester

| | Diesel | Rüböl- *) methylester | Palmester + **) Glycerinether |
|---|---|---|---|
| Viskosität 40° C (cSt) | 2.4 | 7.5 | 12 |
| Viskosität 100° C (cSt) | 0.99 | 2.3 | 3.0 |
| Cetanzahl | 45–55 | 55–65 | 55–65 |
| Brennwert (MJ/kg) | 45.0 | 39.4 | 38.0 |
| Dichte 15° C (g/cm³) | 0.84 | 0.90 | 0.92 |
| Vol. Heizwert (MJ/1) | 35.6 | 32.6 | 30.2 |

*) Beispiel: 12.15; **) Beispiel: 47

## Patentansprüche

1. Verfahren zur Herstellung von $C_{6-24}$-Carbonsäurealkylestern, insbesondere Fettsäurealkylestern und Glycerin und/oder Ethern des Glycerins mit $C_{1-4}$-Alkoholen durch heterogen katalysierte Umsetzung von Triglyceriden, Partialglyceriden und/oder der entsprechenden Carbonsäuren mit einem Überschuss an Alkanolen mit 1 bis 4 C-Atomen in einem Reaktionsrohr bei erhöhter Temperatur und erhöhtem Druck, dadurch gekennzeichnet, dass man einen Katalysator einsetzt, der Aluminium- und/oder Eisenoxid enthält und die Umsetzung in Gleichstrom- oder Kreuzstromfahrweise unter Anwendung eines Druckes von mindestens 63 bar durchführt.

2. Verfahren nach Anspruch 1, dadurch gekennzeichnet, dass der eingesetzte Katalysator eine Oberfläche von mindestens $10\,m^2/g$ und ein Porenvolumen von 0,1 bis 0,8 $cm^3/g$ aufweist.

3. Verfahren nach Ansprüchen 1 und 2, dadurch gekennzeichnet, dass die Umsetzung in einem Rohrreaktor durchgeführt wird, bei dem das Verhältnis von Länge zu Durchmesser zwischen 10:1 bis 100:1 liegt.

4. Verfahren nach den Ansprüchen 1 bis 3, dadurch gekennzeichnet, dass man die Umsetzung bei Temperaturen von 160−400 °C und Drucken bis 400 bar durchführt.

5. Verfahren zur Herstellung von Fettsäurealkylestern und Glycerin gemäss den Ansprüchen 1 bis 4, dadurch gekennzeichnet, dass man die Umsetzung bei Temperaturen von 160−280 °C und Drucken bis 150 bar durchführt.

6. Verfahren nach Anspruch 5, dadurch gekennzeichnet, dass man als Ausgangsprodukte Methanol sowie Triglyceride und/oder Partialglyceride einsetzt und die Umsetzung bei einer Temperatur von 210−280 °C durchführt.

7. Verfahren nach Anspruch 5, dadurch gekennzeichnet, dass man als Ausgangsprodukte Fettsäuren und Alkohole einsetzt und die Umsetzung bei einer Temperatur von 160−220 °C durchführt.

8. Verfahren nach Anspruch 5, dadurch gekennzeichnet, dass man als Ausgangsprodukte Alkohole und Glyceride, gegebenenfalls im Gemisch mit Fettsäuren, einsetzt und die Umsetzung in mehreren Stufen bei unterschiedlicher Temperatur durchführt.

9. Verfahren nach Anspruch 8, dadurch gekennzeichnet, dass man nach jeder Stufe das gebildete Wasser und Glycerin entfernt.

10. Verfahren nach den Ansprüchen 8 und 9, dadurch gekennzeichnet, dass man die Umsetzung in zwei Stufen durchführt, wobei in der ersten Stufe Temperaturen von 215−280 °C, vorzugsweise 225−260 °C, und Drucke bis 150 bar und in der zweiten Stufe Temperaturen von 160−210 °C, vorzugsweise 190−210 °C, und Drucke bis 70 bar eingestellt werden.

11. Verfahren zur Herstellung von Fettsäurealkylestern und Glycerinethern gemäss den Ansprüchen 1 bis 4, dadurch gekennzeichnet, dass man die Umsetzung bei Temperaturen von 280−400 °C und Drucken bis 400 bar durchführt.

12. Verfahren nach Anspruch 11, dadurch gekennzeichnet, dass man als Ausgangsprodukte Alkohole und Glyceride, gegebenenfalls im Gemisch mit Fettsäuren, einsetzt und in einer ersten Stufe bei Temperaturen zwischen 280 und 400 °C zu mehr als 80% umsetzt und sodann in einer zweiten Stufe bei einer Temperatur von 160−230 °C, vorzugsweise 185−215 °C, die Nachreaktion vornimmt.

## Claims

1. A process for the preparation of a $C_{6-4}$-carboxylic acid alkyl ester, in particular a fatty acid alkyl ester, and glycerol and/or an ether of glycerol with a $C_{1-4}$-alcohol through the heterogeneously catalyzed reaction of a triglyceride, a partial glyceride and/or the corresponding carboxylic acid with an excess of an alkanol having 1 to 4 C atoms in a reaction tube at elevated temperature and elevated pressure, characterized in that a catalyst is employed which contains aluminium oxide and/or iron oxide and the reaction is carried out in cocurrent or crosscurrent using a pressure of at least 63 bar.

2. A process according to claim 1, characterized in that the catalyst employed has a surface area of at least $10\,m^2/g$ and a pore volume from 0.1 to 0.8 $cm^3/g$.

3. A process according to claim 1 or 2, characterized in that the reaction is carried out in a tubular reactor in which the length: diameter ratio is from 10:1 to 100:1.

4. A process according to any of claims 1 to 3, characterized in that the reaction is carried out at a temperature from 160 to 400 °C and a pressure up to 400 bar.

5. A process for the preparation of a fatty acid alkyl ester and glycerol according to any of claims 1 to 4, characterized in that the reaction is carried out at a temperature from 160 to 280 °C and a pressure up to 150 bar.

6. A process according to claim 5, characterized in that the starting materials employed are methanol and a triglyceride and/or partial glyceride, and the reaction is carried out at a temperature from 210 to 280 °C.

7. A process according to claim 5, characterized in that the starting materials employed are a fatty acid and an alcohol and the reaction is carried out at a temperature from 160 to 220 °C.

8. A process according to claim 5, characterized in that the starting materials employed are an alcohol and a glyceride, optionally mixed with a fatty acid, and the reaction is carried out in several steps at different temperatures.

9. A process according to claim 8, characterized in that the water and glycerol formed are removed after each step.

10. A process according to claim 8 or 9, characterized in that the reaction is carried out in two steps, a temperature from 215 to 280 °C, preferably 225 to 260 °C, and a pressure up to 150 bar being set in the first step an a temperature from 160 to 210 °C, preferably 190 to 210 °C, and a pressure up to 70 bar being set in the second step.

11. A process for the preparation of a fatty acid alkyl ester and a glycerol ether according to any of claims 1 to 4, characterized in that the reaction is carried out at a temperature from 280 to 400 °C and a pressure up to 400 bar.

12. A process according to claim 11, characterized in that the starting materials employed are an alcohol and a glyceride optionally mixed with a fatty acid, and the reaction is carried out to more than 80% in a first step at a temperature from 280 to 400 °C and the reaction in is then continued in a second step at a temperature from 160 to 230 °C, preferably 185 to 215 °C.

## Revendications

1. Procédé pour préparer des carboxylates d'alkyle en $C_{6-24}$, en particulier d'esters alkyliques d'acides gras et de glycérol et/ou d'éthers du glycérol avec des alcools en $C_{1-4}$, par réaction catalytique hétérogène de triglycérides, de glycérides partiels et/ou des acides carboxyliques correspondants avec un excès d'alcanols comportant de 1 à 4 atomes de carbone, dans un tube réactionnel, à température élevée et sous pression élevée, caractérisé par le fait que l'on utilise un catalyseur renfermant de l'oxyde d'aluminium et/ou de l'oxyde de fer et que l'on effectue la réaction à courants de même sens ou à courants croisés, en utilisant une pression d'au moins 63 bars.

2. Procédé selon la revendication 1, caractérisé par le fait que le catalyseur utilisé présente une surface d'au moins 10 mètres carrés par gramme et un volume de pores de 0,1 à 0,8 $cm^3$ par gramme.

3. Procédé selon les revendications 1 et 2, caractérisé par le fait que la réaction est effectuée dans un réacteur tubulaire dans lequel le rapport de la longueur au diamètre est compris entre 10:1 et 100:1.

4. Procédé selon les revendications 1 à 3, caractérisé par le fait que l'on effectue la réaction à des températures de 160 à 400 °C et sous des pressions allant jusqu'à 400 bars.

5. Procédé de préparation d'esters alkyliques d'acides gras et de glycérol selon les revendications 1 à 4, caractérisé par le fait que l'on effectue la réaction à des températures de 160 à 280 °C et sous des pressions allant jusqu'à 150 bars.

6. Procédé selon la revendication 5, caractérisé par le fait que l'on utilise, comme produits de départ, du méthanol ainsi que des triglycérides et/ou des glycérides partiels et que l'on effectue la réaction à une température de 210 à 280 °C.

7. Procédé selon la revendication 5, caractérisé par le fait que l'on utilise, comme produits de départ, des acides gras et des alcools et que l'on effectue la réaction à une température de 160 à 220 °C.

8. Procédé selon la revendication 5, caractérisé par le fait que l'on utilise, comme produits de départ, des alcools et des glycérides, le cas échéant en mélange avec des acides gras, et que l'on effectue la réaction en plusieurs étapes, à température variable.

9. Procédé selon la revendication 8, caractérisé par le fait que l'on élimine après chaque étape l'eau formée et le glycérol.

10. Procédé selon les revendications 8 et 9, caractérisé par le fait que l'on effectue la réaction en deux étapes, en établissant dans la première étape des températures de 215 à 280 °C, de préférence de 225 à 260 °C, et des pressions allant jusqu'à 150 bars, et en établissant, dans la seconde étape, des températures de 160 à 210 °C, de préférence de 190 à 210 °C, et des pressions allant jusqu'à 70 bars.

11. Procédé de préparation d'esters alkyliques d'acides gras et d'éthers du glycérol selon les revendications 1 à 4, caractérisé par le fait que l'on effectue la réaction à des températures de 280 à 400 °C et sous des pressions allant jusqu'a 400 bars.

12. Procédé selon la revendication 11, caractérisé par le fait que l'on utilise, comme produits de départ, des alcools et des glycérides, la cas échéant en mélange avec des acides gras, et que l'on fait réagir dans une première étape à des températures comprises entre 280 et 400 °C jusqu'à avoir un rendement de plus de 80% et que l'on effectue ensuite la post-réaction dans une seconde étape, à une température de 160 à 230 °C, de préférence de 185 à 215 °C.